# EUROPÄISCHE PATENTSCHRIFT

(11) **EP 2 088 453 B1**
(45) Veröffentlichungstag und Bekanntmachung des Hinweises auf die Patenterteilung: **21.04.2010**
(21) Anmeldenummer: 08101432.6
(22) Anmeldetag: 08.02.2008
(51) Int. Cl.: G01V 8/12, G01S 7/487, G01S 7/10, G01S 17/32

(54) **Optoelektronischer Sensor zur Entfernungsmessung**
Optoelectronic sensor for measuring distance
Capteur optoélectronique destiné à la mesure d'éloignement

(43) Veröffentlichungstag der Anmeldung: 12.08.2009
(73) Patentinhaber: SICK AG, 79183 Waldkirch (DE)
(72) Erfinder: Hug, Gottfried, 79183 Waldkirch (DE); Torabi, Dr. Bahram, 79100 Freiburg (DE); Marra, Martin, 79117 Freiburg (DE)
(74) Vertreter: Hehl, Ulrich

(56) Entgegenhaltungen:
- EP-A- 1 596 221
- WO-A-02/44754
- WO-A-98/18061
- US-A- 3 813 165
- US-A- 4 518 256
- US-A1- 2004 070 745
- US-A1- 2005 168 721

## Beschreibung

Die Erfindung betrifft einen optoelektronischen Sensor und ein Verfahren zur Entfernungsmessung nach dem Lichtlaufzeitverfahren nach dem Oberbegriff von Anspruch 1 beziehungsweise 9.

Die Entfernung eines Objekts kann optisch nach dem Prinzip des Lichtlaufzeitverfahrens bestimmt werden. Dazu kann einem Lichtstrahl ein Sendemuster aufgeprägt werden, das bei Empfang des von dem Objekt reflektierten Lichts mit einem intern erzeugten Referenzmuster verglichen wird. Daraus lässt sich der Lichtweg und damit auch der Abstand errechnen. In der Praxis werden im Wesentlichen zwei Verfahren angewandt. Bei dem einen Verfahren ist das Sendemuster ein einfacher Lichtpuls, dessen Laufzeit gemessen wird. Bei dem anderen Verfahren ist das Sendemuster eine Sinusmodulation, wobei die Phasenlage des Sinus gegenüber einem Referenzsinus modulo der Periode des Sinus der Laufzeit entspricht. Aufgrund von Augenschutzbedingungen sind die zuletzt genannten Phasenmodulationsverfahren gerade bei gering remittierenden Targets wegen der erforderlichen großen Integrationszeiten weniger geeignet. Beim Pulsverfahren lässt sich die integrale Leistung dahingehend gewinnbringend nutzen, dass kurze Pulse mit hoher Energiedichte gesendet werden können und das Signal-Rauschverhältnis somit für den Einzelschuss verbessert wird.

Die Entfernungsmessung kann beispielsweise in der Fahrzeugsicherheit, der Logistik- oder Fabrikautomatisierung oder der Sicherheitstechnik benötigt werden. Insbesondere kann ein Entfernungsmesser, der auf einem reflektierten Lichtstrahl basiert, auf eine Entfernungsänderung des Reflektors oder des reflektierenden oder remittierenden Ziels reagieren. Eine besondere Anwendung ist eine Reflexionslichtschranke, bei welcher der Abstand zwischen Lichtsender und Reflektor überwacht wird.

Soll die Auflösung der Entfernungsmessung eine Genauigkeit im Bereich einiger zehn Millimeter erreichen, so muss die Lichtlaufzeit in einer Größenordnung von hundert Picosekunden genau bestimmt werden. Um eine Distanzauflösung von einem Millimeter zu erreichen, müssen sechs Picosekunden messtechnisch erfasst werden. Eine derartige Präzision ist mit herkömmlichen Pulslaufzeitsystemen nur mit sehr kostenintensiver Elektronik realisierbar.

Kostengünstigere Bausteine wie FPGAs (Field Programmable Gate Array) und andere programmierbare digitale Logikbausteine haben typischerweise Arbeitsfrequenzen im Bereich einiger hundert MHz. Damit lassen sich Nanosekunden, nicht aber Picosekunden auflösen.

In der DE 10 2004 022 911 A1 ist ein Verfahren zur Signalabtastung offenbart, bei dem das Signal auf mehreren parallelen Signalwegen mit jeweils einer unterschiedlichen Verzögerung dem Abtastmodul zugeführt wird, so dass die entstehende Signalschar durch Parallelabtastung mit einem Vielfachen der Grundfrequenz des Abtastmoduls aufgelöst werden kann. Die Verzögerungsleitungen in Form von Leiterbahnen erfordern relativ viel Platz auf der Platine für den Auswertungsbaustein.

Die EP 1 596 221 A1 offenbart eine Entfernungsmessung durch Bestimmen der Pulslaufzeit, bei welcher das Empfangssignal zur Erhöhung der Genauigkeit mehrfach phasenverschoben mit einem Grundtakt abgetastet wird. Die Phasenverschiebung des Grundtaktes wird in einer Ausführungsform dadurch erreicht, dass das Empfangssignal über mehrere Signalleitungen geführt wird, deren Längen und damit Delay-Zeiten gezielt vorgegeben werden.

Die US 3,813,165 beschreibt eine phasenbasierte Entfernungsmessung. Um die Notwendigkeit eines Kompromisses zwischen großem Eindeutigkeitsbereich und hoher Messgenauigkeit zu vermeiden, werden Messungen mit verschiedenen Frequenzen durchgeführt. Dabei kann beispielsweise eine vergleichsweise niederfrequente Messung die Periode einer hochfrequenten Messung bestimmen. Um statistische Einflüsse zu verringern, ist es vorgesehen, die Messung in jeder Frequenz mehrfach auszuführen und das Ergebnis zu mitteln.

Aus der Datenübertragungstechnik, etwa aus dem Mobilfunk, ist zur Rauschunterdrückung die Spreizung und Entspreizung ("Spread Spectrum") bekannt. Dabei wird das Signal bei der Übertragung breitbandiger kodiert, um Störer mit der anschließenden Dekodierung breiter zu verteilen.

Keines der herkömmlichen Verfahren ist in der Lage, die Lichtlaufzeit ohne Einsatz kostenintensiver Elektronik mit der geforderten Präzision zu bestimmen.

Daher ist Aufgabe der Erfindung, die Laufzeit eines Lichtpulses mit einfachen Mitteln hochgenau zu bestimmen.

Diese Aufgabe wird durch einen Sensor nach Anspruch 1 und ein Verfahren nach Anspruch 9 gelöst. Um Signalflanken, welche die Positionen des empfangenen Lichtpulses charakterisieren, für eine hohe zeitliche Auflösung genau zu detektieren, wird eine Vielzahl von Einzellichtpulsen statistisch ausgewertet. Damit die Statistik auf einer möglichst hohen Grundfrequenz aufsetzen kann, die oberhalb der Arbeitsfrequenz des Auswertungsbausteins liegt, wird das Empfangsüchtsignal parallel abgetastet und somit mit einem Vielfachen der Grundfrequenz aufgelöst. Die Verzögerungspfade für diese Parallelabtastung, die beispielsweise um nur 200ps verzögern, können diese Signalverzögerung nicht ohne Schwankungen implementieren. Dadurch ist das parallel abgetastete Signal verfälscht bzw. verjittert. Durch die erfindungsgemäße Umkodierung zur Kompensation dieses Jitters wird die Präzision ganz erheblich verbessert.

Daraus ergibt sich der Vorteil eines kostengünstigen, miniaturisierbaren und hochpräzisen Sensors, der einen sehr großen Dynamikbereich bearbeiten kann, ohne dass die Elektronik große Fehlerterme verursacht. Der Sensor ist robust gegenüber Störungen von extern, sei es in Form elektromagnetischer oder optischer Störer. Durch Signal-zu-Rausch-Optimierung und inhärente Fehlerkorrektur ist eine Entfernungsbestimmung im Millimeterbereich ermöglicht.

Der Lichtsender ist bevorzugt dafür ausgebildet, aufeinanderfolgende Einzellichtpulse mit einem zeitlichen Versatz auszusenden, der dazu führt, dass aufeinanderfolgende Empfangslichtsignale gleichmäßig, insbesondere mehrfach und zyklisch, alle Verzögerungspfade durchlaufen. Somit ist sichergestellt, dass die Beiträge der einzelnen Verzögerungspfade zum Jitter gleich oft auftreten und sich daher möglichst vollständig ausmitteln.

Der Lichtsender ist weiterhin bevorzugt dafür ausgebildet, den zeitlichen Versatz durch Aussenden der Einzellichtpulse unter Verzögerung eines Vielfachen ganzer Sendeperioden zu erzeugen, wobei die Sendefrequenz zu der Arbeitsfrequenz unterschiedlich ist, und die Auswertungseinheit ist dafür ausgebildet, die Abtastung um Vielfache der Abtastperiode zu verzögern. Die Sendefrequenz sollte dabei im Hinblick auf die Anzahl der Verzögerungspfade sinnvoll gewählt werden, so dass die Differenzfrequenz das Charakteristikum der Einzellichtpulse, beispielsweise das Pulsmaximum, jeweils mit jeder Wiederholung auf einen anderen Verzögerungspfad bringt. Allein die Wahl der Sendefrequenz führt dann zu einer gleichmäßigen Verteilung des Charakteristikums auf die Verzögerungspfade und somit zu einer möglichst vollständigen Ausmittelung des Jitters.

In dem Sensor ist bevorzugt ein analoger Vorverarbeiter vorgesehen, welcher das Lichtempfangssignal des jeweils empfangenen Einzellichtpulses als bipolares vorverarbeitetes Signal den Verzögerungspfaden zuführen kann. In einem solchen bipolaren Signal lässt sich das Charakteristikum, also beispielsweise das Pulsmaximum, als statistisch besonders genau bestimmbarer Nulldurchgang ermitteln.

Dabei weist der Vorverarbeiter besonders bevorzugt Folgendes auf:
- einen Verstärker, insbesondere einen Transimpedanzverstärker, zur Verstärkung des Lichtempfangssignals und/oder
- einen Filter, insbesondere einen Bandpassfilter, zur Umwandlung des zunächst unipolaren Lichtempfangsignals in ein bipolares Signal und/oder
- einen Begrenzungsverstärker zur Verstärkung des positiven bzw. negativen Anteils des Signals bis auf einen Sättigungswert.

Der von dem Lichtempfänger in ein elektrisches Signal umgewandelte Lichtpuls ist schwach und sollte daher vor der weiteren Auswertung verstärkt werden. Gleichzeitig kann der Transimpedanzverstärker eine DC-Komponente ausfiltern, also eine nicht modulierte Grundhelligkeit, die sicher kein Lichtpuls ist. Der Bandpassfilter ist eine Ausgestaltung, um das zunächst unipolare elektrische Signal, das ja aus notwendig unipolarem Licht entsteht, in ein bipolares Signal umzuwandeln. Der Begrenzungsverstärker schließlich treibt das Signal in die Sättigung, damit es bei einer späteren Schwellbewertung leichter und genauer erkannt wird.

Verzögerungspfade sind vorteilhafterweise analog implementiert und mit je einem Eingang des programmierbaren Bausteins verbunden und weisen Verzögerungsleitungen oder Allpassfilter auf. Verzögerungsleitungen sind sehr einfach und kostengünstig herzustellen, benötigen aber einen gewissen Platz auf der Platine. Mit einem Allpassfilter lassen sich die Verzögerungspfade auf kleinstem Raum implementieren.

Das Charakteristikum ist bevorzugt ein Extremum oder ein Nulldurchgang und insbesondere der Nulldurchgang des bipolaren Signals, wobei die Auswertungseinheit dafür ausgebildet ist, den Nulldurchgang anhand eines Vorzeichenwechsels oder anhand eines linearen Fits durch mindestens zwei Punkte der Verteilung zu bestimmen. Die Bestimmung eines Extremums durch Vorzeichenwechsel ist ein üblicher Weg, für den zahlreiche Algorithmen existieren. Mit einem Geradenfit wird man unabhängiger von den Remissionseigenschaften des Objektes, dessen Entfernung gemessen wird. In vielen Anwendungen ist dieses Verfahren daher genauer.

Der Lichtsender ist vorteilhafterweise dafür ausgebildet, jeden Einzellichtpuls wenigstens als Doppelpuls mit variierender Doppelpulsverzögerung zwischen den beiden Pulsen der Doppelpulse auszusenden, wobei die Auswertungseinheit dafür ausgebildet ist, die Doppelpulsverzögerungen bei der Auswertung derart zu kompensieren, dass jeweils die beiden Pulse eines Doppelpulses zeitlich übereinander liegen. Auf diese Weise können schmalbandige Störer unterdrückt werden. Dabei kann es sich beispielsweise um Umgebungslicht oder Licht anderer auch baugleicher Sensoren, aber auch um jegliche sonstige optische oder elektrische Störung handeln.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung einer Ausführungsform des erfindungsge- mäßen Sensors;
- Fig. 2: eine weitere Darstellung gemäß Figur 1 zur Erläuterung des Sensorauf- baus;
- Fig. 3: das schematische Diagramm eines Sendepulses und der zugehörigen Empfangssignale in verschiedenen Verarbeitungsstufen;
- Fig. 4: eine Darstellung der parallelen Abtastzeitpunkte zur Erläuterung des durch die Verzögerungspfade bedingten Jitters;
- Fig. 5: eine erläuternde Darstellung der erfindungsgemäßen ersten Umkodierung im Frequenzbereich;
- Fig. 6a: eine Darstellung des erfindungsgemäßen zeitlichen Versatzes der Sende- pulse;
- Fig. 6b: eine Darstellung der erfindungsgemäßen ersten Umkodierung im Zeitbe- reich;
- Fig. 7: eine Darstellung der erfindungsgemäßen zweiten Umkodierung im Zeitbe- reich;
- Fig. 8a: eine Darstellung eines Signals im Frequenzbereich, das von einem schmalbandigen Störer überlagert ist;
- Fig. 8b: eine Darstellung gemäß Fig. 8a nach der Dekodierung zur Erläuterung des Effekts der Entspreizung gemäß der zweiten Umkodierung;
- Fig. 9: eine durch Histogramm angenäherte Verteilung empfangener Lichtpulse zur Erläuterung der statistischen Bestimmung des Charakteristikums, durch welches die Lichtlaufzeit ermittelt wird; und
- Fig. 10: eine Darstellung verschiedener Verteilungen bei Objekten unterschiedlicher Remission zur Erläuterung der Nulldurchgangsbestimmung mittels Gera- denfit.

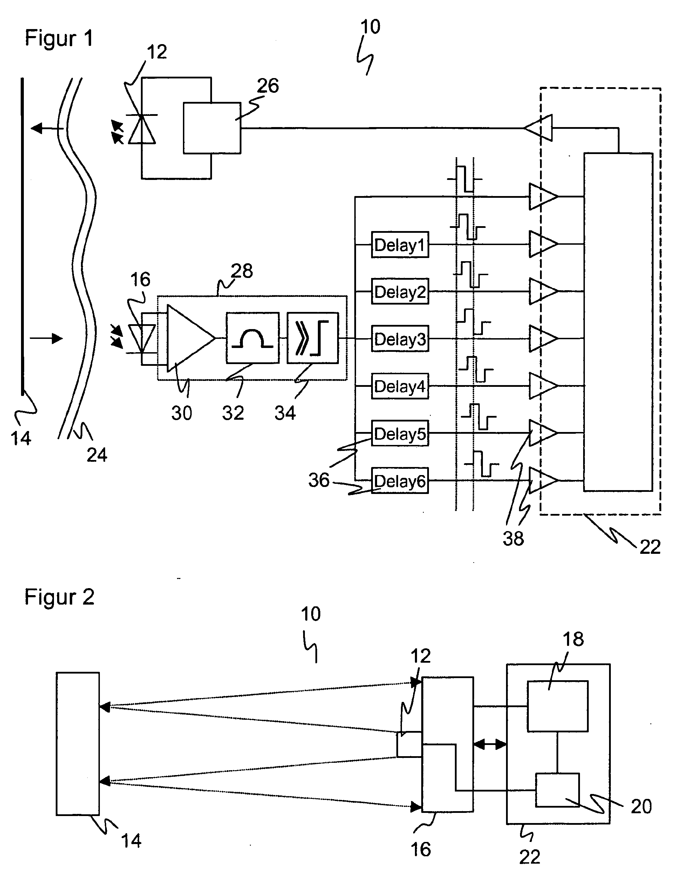

Figur 2 zeigt einen sehr vereinfacht dargestellten optoelektronischen Entfernungsmesser oder Sensor 10, der über einen Lichtsender 12 einen Lichtpuls zu einem Objekt 14 sendet. Das Objekt 14 kann ein beliebiges Target sein, dessen Entfernung bestimmt werden soll, aber auch der Reflektor einer Reflexionslichtschranke. Der dort reflektierte oder remittierte Lichtstrahl kehrt zu einem Lichtempfänger 16 zurück, der den Lichtsender 12 umgibt. Weil sich der Lichtstrahl auf seinem Weg aufweitet, verdeckt der Lichtsender 12 nur einen kleinen und unerheblichen Teil des reflektierten Lichts. Natürlich kann man alternativ auch andere bekannte Lösungen einsetzen, wie einen Strahlteiler oder Pupillenteilung. Lichtsender 12 und Lichtempfänger 16 können abweichend von der Darstellung eine gemeinsame oder jeweils eine kollimierende Optik aufweisen.

Eine Steuerung 18 kann den Lichtsender 12 ansteuern und ihn veranlassen, einzelne Lichtpulse zu einer bekannten Zeit auszusenden. Die Sendefrequenz wird durch eine Sendefrequenzsteuerung 20 eingestellt und ist in einer bevorzugten Ausführungsform verschieden von einer Arbeitsfrequenz eines programmierbaren Bausteins 22, auf dem die Steuerung 18 und die Sendefrequenzsteuerung 20 implementiert sind. Beispielsweise kann die Sendefrequenz 700 MHz und die Arbeitsfrequenz 800 MHz betragen. Sendefrequenz und Arbeitsfrequenz können durch interne PLLs (Phase-Locked Loop) des Bausteins 22 generiert werden.

Die Steuerung 18 ist in dieser Ausführungsform auf einem FPGA (Field Programmable Gate Array) 22 implementiert. Denkbar ist auch eine andere Implementierung etwa mittels PLD (programmable logic device), ASIC (Application Specific Integrated Circuit) oder eines anderen digitalen Baussteins. In Bezug auf Kostenaufwand, Flexibilität und Geschwindigkeit ist aber einem FPGA der Vorzug zu geben.

Die Steuerung 18 bestimmt den Empfangszeitpunkt des Lichtpulses in dem Lichtempfänger 16 in einer im Folgenden beschriebenen Weise. Aus dem Empfangszeitpunkt errechnet sich mit dem bekannten Aussendezeitpunkt die Lichtlaufzeit, die wiederum über die Lichtgeschwindigkeit der Entfernung des Zielobjekts 14 entspricht. Dabei sind zumindest zwei Modi möglich: In einem Modus wird die Lichtlaufzeit und damit die Entfernung absolut gemessen. In einem anderen Modus wird eine bestimmte Entfernung eingelernt, beispielsweise zu einem festen kooperativen Ziel, und überwacht, ob sich dessen Abstand ändert.

Der Sensor 10 kann ein optoelektronischer Taster oder Entfernungsmesser sein. Denkbar ist auch eine Reflexionslichtschranke, also eine Lichtschranke mit einem Lichtsender und einem gegenüber angeordneten Reflektor, wobei eine Unterbrechung des dort reflektierten Strahls detektiert wird. Durch die Messung der Entfernung oder der Änderung der Entfernung dieses Reflektors kann überwacht werden, ob der Reflektor noch am erwarteten Ort steht. Alle genannten Sensoren können auch als Schalter arbeiten, indem ein Schaltereignis bei Detektion eines Objekts in einer bestimmten Entfernung oder bei Abweichung von einer erwarteten Entfernung ausgelöst wird.

Der Sensor 10 ist in Figur 1 nochmals dargestellt. Dabei sind gleiche Merkmale hier und im Folgenden mit gleichen Bezugszeichen bezeichnet. Als Lichtsender ist hier beispielhaft eine Halbleiterlichtquelle 12 dargestellt, etwa ein Laser oder eine Leuchtdiode, als Lichtempfänger beispielhaft eine Photodiode 16. Grundsätzlich ist statt einer Photodiode 16 jeder Empfänger geeignet, der ein Lichtsignal entsprechend schnell in ein elektrisches Signal umwandeln kann. Das Zielobjekt 14 ist für gewöhnlich im Maßstab der Figur 1 weiter entfernt, wie durch gebrochene Linien 24 angedeutet ist.

Der Sensor 10 hat einen Sendepfad, zu dem neben dem eigentlichen Lichtsender 12 noch ein Lasertreiber 26 gehört, sowie einen Empfangspfad, zu dem die Photodiode 16 gehört, die über einen analogen Vorverarbeiter 28 das Empfangssignal dem programmierbaren Baustein 22 zuführt.

Der analoge Vorverarbeiter 28 bildet einen mehrstufigen Verarbeitungspfad. Dieser beginnt mit einem Verstärker 30, etwa einem Transimpedanzverstärker, der das Signal der Photodiode 16 annimmt und verstärkt. Ein nachgeschalteter Filter 32, der beispielsweise ein Bandpassfilter sein kann, wandelt das unipolare Lichtpulssignal in ein bipolares Signal um. Als nächste Vorverarbeitungsstufe ist ein Begrenzerverstärker 34 vorgesehen, der die Amplitude so weit verstärkt und anschließend abschneidet, dass das Lichtpulssignal zu einem in die Sättigung getriebenen Rechteckpuls wird.

In einer Vielzahl paralleler Verzögerungspfade 36 wird dieser Rechteckpuls für eine Parallelabtastung mit jeweils einer eigenen Verzögerung je Verzögerungspfad 36 dem Baustein 22 zugeführt. Die Verzögerungspfade 36 können als einfache Verzögerungsleitungen, bevorzugt aber als diskret ausgeführte Allpassfilter ausgebildet sein. Dabei wird mittels Induktivitäten und Kapazitäten eine Signalverzögerung von ca. 190 mm Laufzeit diskret elektronisch auf einem Leiterplattenbereich von wenigen Millimetern abgebildet.

Damit die Parallelabtastung auf gleichmäßigen Stützstellen beruht, sind bevorzugt die Verzögerungen so zu wählen, dass sie eine Abtastperiode des Bausteins 22 gleichmäßig abdecken. Beträgt die Arbeitsfrequenz des Bausteins 22 und die daraus abgeleitete, in der dargestellten Ausführungsform gleiche Abtastfrequenz 800 MHz und sind wie dargestellt sieben Verzögerungspfade 36 vorgesehen, so betragen die Verzögerungen demnach Vielfache 0*178ps ... 6*178ps, wobei 178ps gerade einem Siebtel der Abtastperiode von 1.25ns zu 800 MHz entspricht.

Jeder Verzögerungspfad ist mit einem Eingang 38 des Bausteins 22 verbunden, und die parallel zugeführten Signale werden in dem Baustein 22 digitalisiert. Da der Begrenzerverstärker 34 bevorzugt zumindest annähernd ein Rechtecksignal erzeugt, genügt für die Digitalisierung ein Binarisierer, da das Rechteck in Kenntnis der vorgegebenen Grenzamplitude des Begrenzerverstärkers 34 ohnehin nur noch eine Bitinformation der Amplitude trägt. Wenn mit jeder Abtastperiode sieben Werte parallel abgetastet werden können, ergibt sich eine effektive Abtastrate von 5.6 GHz. Durch die Anzahl der Verzögerungspfade 36 lässt sich die effektive Abtastrate variieren.

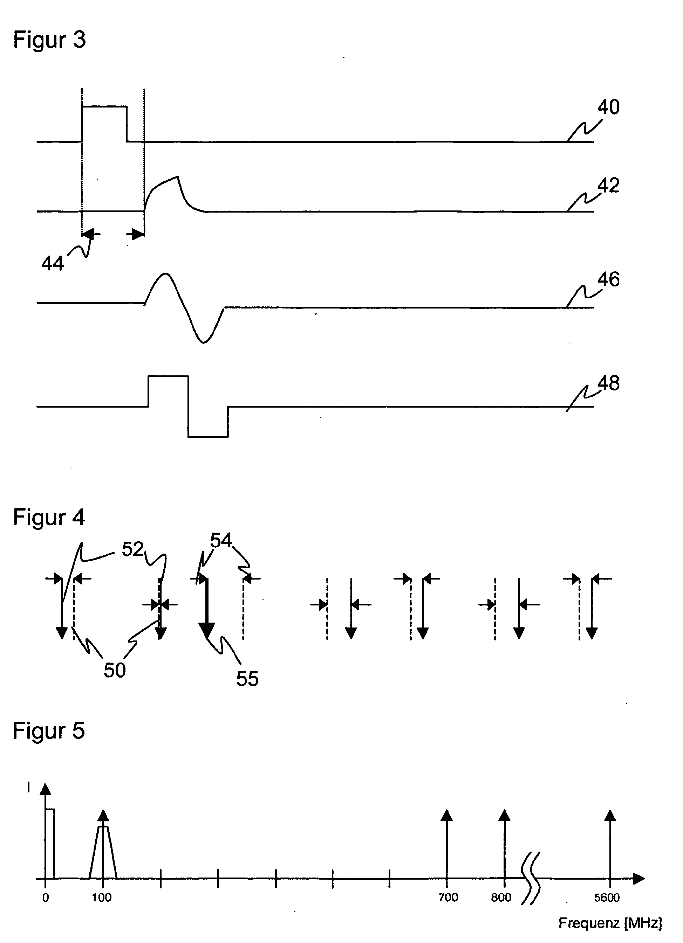

Figur 3 zeigt den Signalverlauf eines einzelnen ausgesandten Pulses und das zugehörige Lichtempfangssignal in verschiedenen Verarbeitungsstufen. Da die Genauigkeit der Auswertung eines einzelnen Pulses auch mit der effektiven erhöhten Abtastfrequenz für die gewünschte zeitliche Präzision zu stark verrauscht ist, wird eine Vielzahl derartiger Pulse nacheinander ausgesandt und statistisch ausgewertet.

Der Lichtsender 16 erzeugt jeweils einen Lichtpuls 40, der ohne Berücksichtigung eines Rauschens die Bestimmung eines präzisen Zeitpunkts ermöglicht. Dafür eignet sich ein Rechteckpuls, es sind aber auch andere Pulse vorstellbar, wie beispielsweise Gaußpulse. Der Lichtpuls wird in dem Überwachungsbereich des Sensors 10 an dem Zielobjekt 14 reflektiert oder remittiert und dann in dem Lichtempfänger 16 in ein elektrisches Signal umgewandelt. Anschließend wird das elektrische Signal in dem Verstärker 30 verstärkt. Das entstehende verstärkte elektrische Signal 42 ist kein sauberes Rechteck, sondern über die dargestellte Verzerrung durch Filtereigenschaften des optischen und elektrischen Signalwegs hinaus auch entgegen der Darstellung verrauscht und verschmiert. Der Zeitunterschied 44 zwischen dem Pulsbeginn des ausgesandten Signals 40 und dem Pulsbeginn des empfangenen Signals 42 ist die gesuchte Lichtlaufzeit, welche über die Lichtgeschwindigkeit zugleich ein Entfernungswert ist. Dabei muss die Referenz nicht der Pulsbeginn sein, sondern kann auch sein Ende, Maximum oder sonstiges zeitlich identifizierbares Merkmal sein.

Der Bandpassfilter 32 wandelt das zunächst unipolare verstärkte Signal 42 in ein bipolares Signal 46 um. Damit kann das Maximum des verstärkten Signals 42 nunmehr stattdessen als Nulldurchgang des bipolaren Signals 46 leichter identifiziert werden. Die Signalform 46 ist vom Mittelwert befreit und lässt sich ohne große Offsetverschiebung verstärken. Ein gewollter Effekt ist eine Reduktion der Rauschterme durch die Ausblendung niederer und hoher Frequenzen.

In dem Begrenzerverstärker 34 wird das bipolare Signal 46 in eine einfache Rechteckschwingung 48 umgewandelt. Der Begrenzerverstärker 34 ermöglicht eine Dynamikkompression, da er ohne wesentliche Phasenverschiebung das Empfangssignal bis in die Begrenzung verstärkt. Die Rechteckschwingung 48 wird über die Verzögerungspfade 36 dem Baustein 22 zugeführt, welche insgesamt sechs Zwischenabtastungen ermöglichen.

Die Parallelabtastung und die damit erhöhte effektive Abtastrate führt nur dann zu einer höheren zeitlichen Präzision der Auswertung, wenn die Zwischenabtastungen zeitlich genau definiert sind. Eine im Picosekundenbereich präzise Verzögerung ist aber zumindest mit einfachen Mitteln, wie Verzögerungsleitungen und Allpassfiltern, nicht realisierbar. Im Gegenteil tritt immer ein Jitter einerseits durch statische Effekte, also Ungenauigkeiten der Bauteile, andererseits aber auch dynamische Effekte wie Temperaturschwankungen auf. Dieser Effekt ist in Figur 4 illustriert. Dabei zeigen gestrichelte Linien 50 die idealen, gleichmäßig verteilten sieben Abtastzeitpunkte einer Arbeitsperiode. Mit Pfeilen 52 sind beispielhafte reelle, dagegen verschobene Abtastzeitpunkte dargestellt. Durch diese Schwankungen 54 ist das parallel abgetastete Signal unpräzise. Die ermittelte Laufzeit würde somit abhängig davon, über welchen Verzögerungspfad 36 das Charakteristikum 55 des Pulses, also beispielsweise dessen Maximum, den Baustein 22 erreicht.

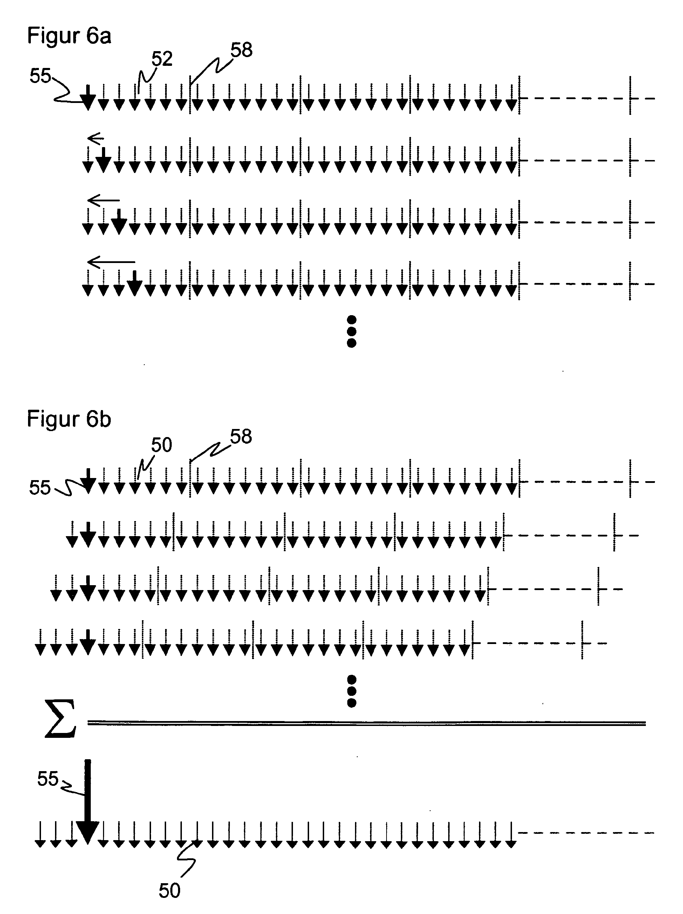

Um diesen Störeffekt auszugleichen, wird erfindungsgemäß eine erste Umkodierung vorgenommen. Dies wird anhand der Figur 5 im Frequenzbereich und anhand der Figuren 6a und 6b im Zeitbereich erläutert. Dadurch, dass die Sendefrequenz gegenüber der Abtastfrequenz eine Differenzfrequenz von 100 MHz aufweist, also die Abtastfrequenz gerade 100 MHz verschoben zur Sendefrequenz ist, ergibt sich eine Zwischenfrequenz von 100 MHz, welche die Fehlerterme der Parallelabtastung einschließlich der Verzögerungsfehler beinhaltet. Indem nun erfindungsgemäß die Abtastwerte auf die Sendefrequenz zurückkodiert werden, wird ein Mischprozess ins Basisband bewirkt, bei dem sich die Fehler durch Integration ausmitteln und das Signal erhalten bleibt. Derselbe günstige Effekt tritt selbstverständlich auch dann auf, wenn geeignete andere untereinander unterschiedliche Sende- und Abtastfrequenzen und eine zugehörige Anzahl von Verzögerungspfaden 36 gewählt werden.

Dies wird nun im Zusammenhang mit Figur 6 noch einmal im Zeitbereich erläutert. Figur 6a zeigt Abtastzeitpunkte durch die Pfeile 52, die mit senkrechten gestrichelten Linien 58 jeweils zu siebt gruppiert sind, um eine gemeinsame Parallelabtastung darzustellen. Jede wiederholte Aussendung eines Lichtpulses durch den Lichtsender 12 wird nun um jeweils eine zusätzliche Sendeperiode, also 1/700MHz = 1,43 ns, verzögert, während die Abtastung um jeweils eine zusätzliche Abtastperiode von 1/800MHz =1,25 ns verzögert wird. Dadurch ergibt sich bei der n-ten Wiederholung eine relative Verschiebung 60 von n*178ps, bis nach je sieben Wiederholungen der Beginn einer Sende- und Abtastperiode aufeinander fallen. Das Charakteristikum 55 wandert daher um die Verschiebungen 60, erreicht also durch den kodierten zeitlichen Versatz den Baustein 22 im zyklischen gleichmäßigen Wechsel nacheinander über alle Verzögerungspfade 36.

Bei der Auswertung wird diese Verzögerung 60 nun dekodiert, die Charakteristika 55 werden also wie in Figur 6b gezeigt zeitlich übereinander gelegt. Nach Aufintegrieren oder -summieren ergibt sich ein starkes Nutzsignal 55, das durch Ausmitteln von dem durch Jitter der Verzögerungspfade verursachten Messfehler befreit ist. Da die Sende- und Abtastfrequenz aus demselben Quarz generiert werden, wird über deren etwaige Ungenauigkeit kein weiterer Fehler eingeführt. Dabei ist vorstellbar, dass ein systematischer, nicht symmetrisch um einen Zeitnullpunkt verteilter Jitteranteil verbleibt. Dieser kann aber durch anfängliche Kalibrierung des entfernungsmessenden Sensors 10 kompensiert werden.

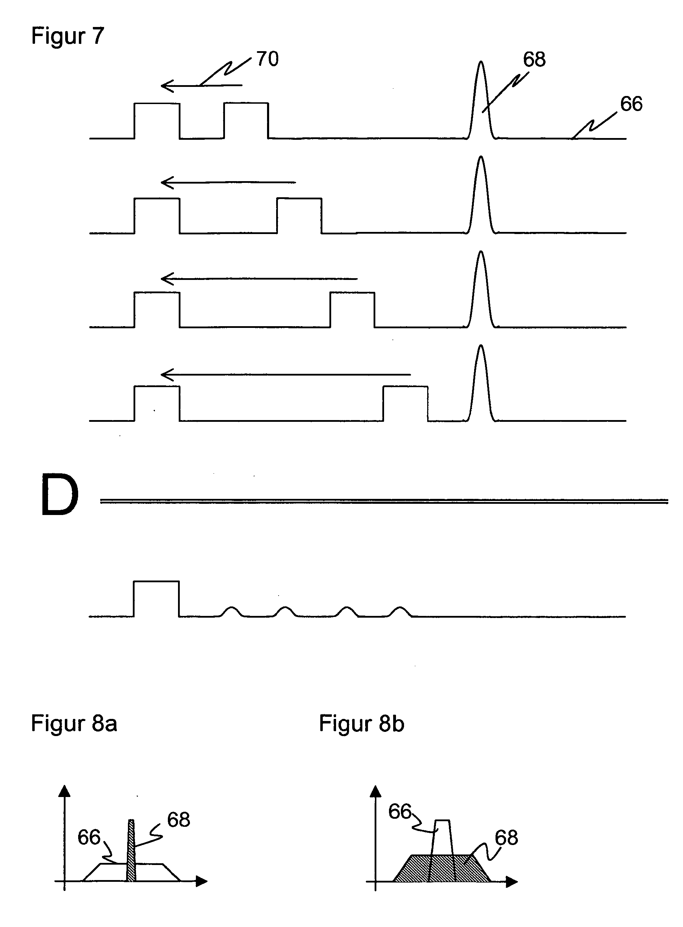

Um den Sensor 10 gegenüber schmalbandigen optischen und elektrischen Störern unempfindlicher zu machen, ist erfindungsgemäß eine zweite Umkodierung vorgesehen. Diese wird anhand der Figur 7 im Zeitbereich und der Figuren 8a und 8b im Frequenzbereich erläutert. Statt des in Figur 3 dargestellten Einzelpulses 40 wird jeweils ein Doppelpuls 66 ausgesandt. Um die zweite Umkodierung zu illustrieren, ist der Sendepuls von einem schmalbandigen Störpuls 68 überlagert, der eine größere Amplitude hat als der Nutzpuls. Mit jeder wiederholten Aussendung wird das Zeitintervall 70 zwischen den Doppelpulsen variiert. Beispielsweise kann dies mit einer 16-stufigen Vervielfachung einer Verzögerung von 1,43 ns (1/700 MHz) realisiert sein.

Bei der Dekodierung werden die Verzögerungen 70 ausgeglichen, die Doppelpulse also übereinander gelegt. Durch Summenbildung über die Einzelpulse verstärken sich dann die Empfangspulse, die durch die Dekodierung gerade übereinander zu liegen kommen, während der schmalbandige Störer 68 bei jeder Wiederholung an einer anderen Stelle liegt und sich dadurch herausmittelt. Es ist auch denkbar, Tripel- und weitere Mehrfachpulse zu verwenden und dabei mehrere Verschiebungen jeweils auf denselben Teilpuls vorzunehmen, um den Störer noch weiter zu unterdrücken.

Dieser Effekt ist in den Figuren 8a und 8b noch einmal im Frequenzbereich gezeigt. In Figur 8a ohne zweite Umkodierung liegt der schmalbandige Störer 68 mit höherer Amplitude über dem Nutzsignal 66, so dass das Nutzsignal 66 nur schwer oder gar nicht ausgewertet werden kann. In Figur 8b ist die Situation nach der zweiten Umkodierung und in anderem Maßstab dargestellt. Das Nutzsignal 66 hebt sich jetzt klar aus dem Störsignal 68 heraus, weil das Störsignal 68 durch die Mittelung über einen größeren Frequenzbereich verschmiert wurde. Durch die zweite Umkodierung wird somit eine Aufspreizung im Sendespektrum erzeugt (spread spectrum). Bei der Dekodierung im Abtastbereich werden Störer im Frequenzbereich verteilt und dadurch unterdrückt.

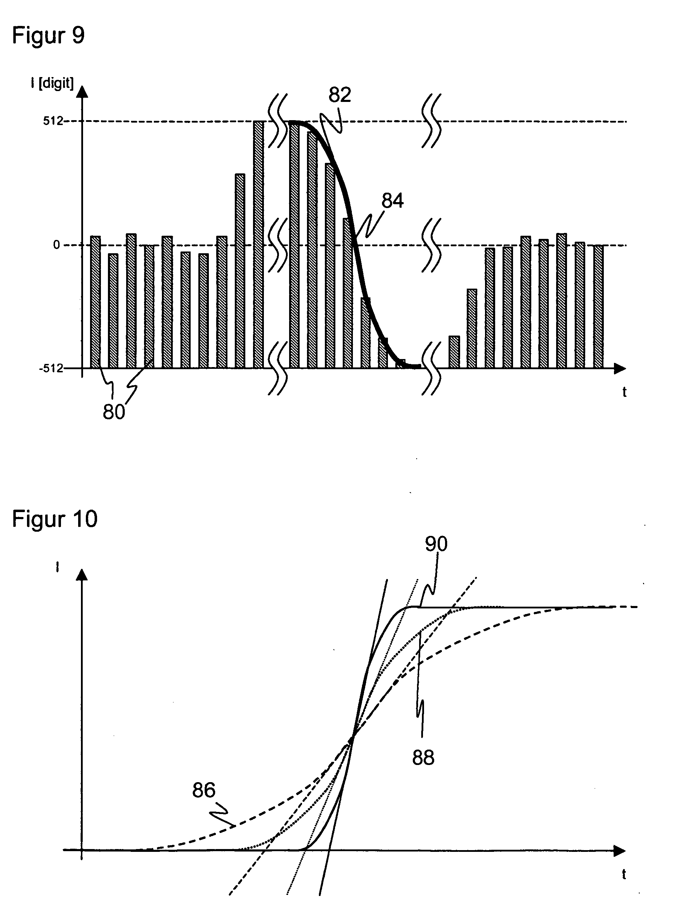

Erfindungsgemäß wird der Verlauf des Empfangspulses aus der statistischen Verteilung einer Vielzahl einzelner Pulse ausgewertet. Dazu wird beispielsweise jede Mikrosekunde ein Puls oder, bei zweiter Umkodierung, ein Doppelpuls ausgesandt. Nach etwas über einer Millisekunde entstehen somit 1024 Werte je Zwischenabtastzeitpunkt. Der Kurvenverlauf wird dabei bevorzugt jeweils binär aufgezeichnet, so dass jede Wiederholung entweder eine Null oder eine Eins zu der kumulierten Verteilung beiträgt. Eine solche Verteilung, die noch um das Offset von 512 des Ruheerwartungswerts nach unten verschoben ist, stellt Figur 9 dar. Jeder Histogrammbalken 80 entspricht einem Zwischenabtastzeitpunkt, und in ihrer Gesamtheit bilden die Histogrammbalken 80 eine diskrete Annäherung an die Verteilung der Empfangssignale. Die fallende Flanke 82 der somit angenäherten idealen Verteilung legt an ihrem Nulldurchgang 84 einen gut definierten Bezugszeitpunkt des Empfangspulses fest. Dieser fallende Nulldurchgang 84 kann also anhand eines Vorzeichenwechsels bei hinreichend großer Amplitude links und rechts des Nulldurchgangs 84 zur Unterscheidung des Empfangspulses von statistischen Schwankungen bestimmt werden.

Anders ausgedrückt kann der Mittenpegel der Kennlinie durch Interpolation erkannt werden. Die Steilheit der Kennlinie ist abhängig vom Signal-Rauschverhältnis, wird jedoch begrenzt durch die maximale Anstiegszeit im System und Fehlerterme der Verzögerungspfade 36. Erfindungsgemäß wird die Kennlinie durch die erste Umkodierung abgeflacht und daher genauer auswertbar. Ob sich bei der Berechnung der Lichtlaufzeit der Referenzeitpunkt des Aussendens auf denselben Bezugszeitpunkt innerhalb des Sendepulses stützt wie im Empfangspuls, ist für die Funktion des Sensors 10 unerheblich. Dadurch entsteht allenfalls ein fixer Beitrag, der durch Kalibrierung kompensiert werden kann.

Die Erfindung umfasst auch andere denkbare Charakteristika zur Festlegung des Empfangszeitpunkts, etwa ein Maximum oder Minimum und andere.

Figur 10 zeigt eine Alternative zur Bestimmung des Nulldurchgangs 84. Dabei ist Intensitätsverlauf eines schwarzen Targets 86, eines grauen Targets 88 und eines weißen Targets 90 dargestellt. Der Nulldurchgang des Verlaufes ist von den Remissionseigenschaften unabhängig und daher robust gegenüber verschiedenen Objekten 14. Dieser Nulldurchgang kann in seiner Umgebung durch linearen Fit etwa mit einer Regressionsgeraden ermittelt werden.

## Patentansprüche

1. Optoelektronischer Sensor (10) zur Entfernungsmessung nach dem Lichtlaufzeitverfahren mit einem Lichtsender (12) zum Aussenden von Einzellichtpulsen und einem Lichtempfänger (16) zum Empfang der remittierten oder reflektierten Einzellichtpulse als Lichtempfangssignal sowie mit einer auf einem programmierbaren Baustein (22), insbesondere einem Field Programmable Gate Array oder einem Programmable Logic Device, implementierten Auswertungseinheit (18), welche dafür ausgebildet ist, aus einem Charakteristikum der statistischen Verteilung einer Vielzahl empfangener Einzellichtpulse die Lichtlaufzeit zwischen Aussenden und Empfang zu bestimmen, wobei mehrere parallele Verzögerungspfade (36) zwischen Lichtsender (12) und programmierbarem Baustein (22) vorgesehen sind, welche jeweils das Lichtempfangssignal mit untereinander verschiedenen Verzögerungen dem programmierbaren Baustein (22) zuführen können, um in jeder durch die Arbeitsfrequenz des programmierbaren Bausteins (22) vorgegebenen Abtastperiode durch Parallelabtastung mehrere Werte des Lichtempfangssignals zu gewinnen,
**dadurch gekennzeichnet,**
**dass** der Lichtsender (12) dafür ausgebildet, ist, aufeinanderfolgende Einzellichtimpulse mit einem variierenden zeitlichen Versatz auszusenden,
und **dass** die Auswertungseinheit (18) dafür ausgebildet ist, unter Kompensation des zeitlichen Versatzes über die Einzellichtpulse zu mitteln, um Schwankungen in den Verzögerungspfaden (36) auszugleichen.

2. Sensor (10) nach Anspruch 1,
wobei der Lichtsender (12) dafür ausgebildet ist, aufeinanderfolgende Einzellichtpulse mit einem zeitlichen Versatz auszusenden, der dazu führt, dass aufeinanderfolgende Empfangslichtsignale gleichmäßig, insbesondere mehrfach und zyklisch, alle Verzögerungspfade (36) durchlaufen.

3. Sensor (10) nach Anspruch 1 oder 2,
wobei der Lichtsender (12) dafür ausgebildet ist, den zeitlichen Versatz durch Aussenden der Einzellichtpulse unter Verzögerung eines Vielfachen ganzer Sendeperioden zu erzeugen, wobei die Sendefrequenz zu der Arbeitsfrequenz unterschiedlich ist, und die Auswertungseinheit (22) dafür ausgebildet ist, die Abtastung um Vielfache der Abtastperiode zu verzögern.

4. Sensor (10) nach einem der vorhergehenden Ansprüche,
wobei ein analoger Vorverarbeiter (28) vorgesehen ist, welcher das Lichtempfangssignal des jeweils empfangenen Einzellichtpuls als bipolares vorverarbeitetes Signal den Verzögerungspfaden (36) zuführen kann.

5. Sensor (10) nach Anspruch 4,
wobei der Vorverarbeiter (28) folgendes aufweist:
- einen Verstärker (30), insbesondere einen Transimpedanzverstärker, zur Verstärkung des Lichtempfangssignals und/oder
- einen Filter (32), insbesondere einen Bandpassfilter, zur Umwandlung des zunächst unipolaren Lichtempfangsignals in ein bipolares Signal und/oder
- einen Begrenzungsverstärker (34) zur Verstärkung des positiven bzw. negativen Anteils des Signals bis auf einen Sättigungswert.

6. Sensor (10) nach einem der vorhergehenden Ansprüche,
wobei die Verzögerungspfade (36) analog implementiert und mit je einem Eingang des programmierbaren Bausteins (22) verbunden sind und Verzögerungsleitungen oder einen Allpassfilter aufweisen.

7. Sensor (10) nach einem der vorhergehenden Ansprüche,
wobei das Charakteristikum ein Extremum oder ein Nulldurchgang und insbesondere der Nulldurchgang des bipolaren Signals ist, und wobei die Auswertungseinheit (18) dafür ausgebildet ist, den Nulldurchgang anhand eines Vorzeichenwechsels oder anhand eines linearen Fits durch mindestens zwei Punkte der Verteilung zu bestimmen.

8. Sensor (10) nach einem der vorhergehenden Ansprüche,
wobei der Lichtsender (12) dafür ausgebildet ist, jeden Einzellichtpuls wenigstens als Doppelpuls mit variierender Doppelpulsverzögerung zwischen den beiden Pulsen der Doppelpulse auszusenden, und wobei die Auswertungseinheit (18) dafür ausgebildet ist, die Doppelpulsverzögerungen bei der Auswertung derart zu kompensieren, dass jeweils die beiden Pulse eines Doppelpulses zeitlich übereinander liegen.

9. Verfahren zur Entfernungsmessung nach dem Lichtlaufzeitverfahren, bei dem ein Lichtsender (12) Einzellichtpulse aussendet und ein Lichtempfänger (16) die remittierten oder reflektierten Einzellichtpulse als Lichtempfangssignal empfängt, wobei in einer auf einem programmierbaren Baustein (22), insbesondere einem Field Programmable Gate Array oder einem Programmable Logic Device, implementierten Auswertungseinheit (18) aus einem Charakteristikum der statistischen Verteilung einer Vielzahl empfangener Einzellichtpulse die Lichtlaufzeit zwischen Aussenden und Empfang bestimmt wird und wobei die effektive Abtastfrequenz des programmierbaren Bausteins (22) durch Parallelabtastung mehrerer Werte des Lichtempfangssignals in jeder durch die Arbeitsfrequenz des programmierbaren Bausteins (22) vorgegebenen Abtastperiode erhöht wird, indem jeweils das Lichtempfangssignal auf mehreren parallelen Verzögerungspfaden zwischen Lichtsender (12) und programmierbarem Baustein (22) mit untereinander verschiedenen Verzögerungen dem programmierbaren Baustein (22) zugeführt wird,
**dadurch gekennzeichnet,**
**dass** die Vielzahl von Einzellichtpulsen derart ausgesendet wird, dass die Lichtempfangssignale jeweils mit einem variierenden zeitlichen Versatz den Verzögerungspfaden (36) zugeführt werden und dass unter Kompensation des zeitlichen Versatzes über die Einzellichtpulse gemittelt wird, um Schwankungen in den Verzögerungspfaden (36) auszugleichen.

10. Verfahren nach Anspruch 9,
wobei der zeitliche Versatz durch verzögertes Aussenden der Einzellichtpulse um Vielfache ganzer Sendeperioden und der Abtastung um Vielfache ganzer Abtastperioden erzeugt wird, wobei die Sendefrequenz zu der Arbeitsfrequenz unterschiedlich ist.

11. Verfahren nach Anspruch 9 oder 10,
wobei jeder Einzellichtpuls als Doppelpuls mit variierender Doppelpulsverzögerung zwischen den beiden Pulsen der Doppelpulse ausgesendet wird, und wobei die Doppelpulsverzögerungen bei der Auswertung derart kompensiert werden, dass jeweils die beiden Pulse eines Doppelpulses zeitlich übereinander liegen.

## Claims

1. An optoelectronic sensor (10) for distance measurement in accordance with the light transit time process having a light transmitter (12) for the transmission of individual light pulses and having a light receiver (16) for the reception of the remitted or reflected individual light pulses as a received light signal as well as having an evaluation unit (18) which can be implemented on a programmable component (22), in particular on a field gate array or a programmable logic device, and which is made to determine the light transit time between the transmission and reception from a characteristic of the statistical distribution, wherein a plurality of parallel delay paths (36) is provided between the light transmitter (12) and the programmable component (22) which can in each case supply the received light signal to the programmable component (22) with mutually different delays in order to gain a plurality of values of the received light signal in each sampling period preset by the working frequency of the programmable component (22),
**characterised in that**
the light transmitter (12) is made to transmit sequential individual light pulses with a varying time offset;
and **in that** the evaluation unit (18) is made to average over the individual light pulses while compensating the time offset to make up for fluctuations in the delay paths (36).

2. A sensor (10) in accordance with claim 1,
wherein the light transmitter (12) is made to transmit sequential individual light pulses with a time offset which has the result that sequential received light signals run through all the delay paths (36) uniformly, in particular multiply and cyclically.

3. A sensor (10) in accordance with claim 1 or claim 2,
wherein the light transmitter (12) is made to generate the time offset by transmission of the individual light pulses with a delay of a multiple of whole transmission periods, with the transmission frequency being different from the working frequency and the evaluation unit (22) being made to delay the sampling by multiples of the sampling period.

4. A sensor (10) in accordance with any one of the preceding claims,
wherein an analogue preprocessor (28) is provided which can supply the received light signal of the respectively received individual light pulse to the delay paths (36) as a bipolar preprocessed signal.

5. A sensor (10) in accordance with claim 4,
wherein the preprocessor (28) has the following:
- an amplifier (30), in particular a transimpedance amplifier, for the amplification of the received light signal; and/or
- a filter (32), in particular a band pass filter, for the conversion of the initially unipolar received light signal into a bipolar signal; and/ or
- a limiting amplifier (34) for the amplification of the positive or negative portion of the signal up to a saturation value.

6. A sensor (10) in accordance with any one of the preceding claims,
wherein the delay paths (36) are implemented in analogue form and are connected to a respective input of the programmable component (22) and have delay lines or an allpass filter.

7. A sensor (10) in accordance with any one of the preceding claims,
wherein the characteristic is an extreme or a zero crossing and in particular the zero crossing of the bipolar signal, and wherein the evaluation unit (18) is made to determine the zero crossing with reference to a sign change or with reference to a linear fit by at least two points of the distribution.

8. A sensor (10) in accordance with any one of the preceding claims,
wherein the light transmitter (12) is made to transmit every individual light pulse at least as a double pulse with varying double pulse delay between the two pulses of the double pulse; and wherein the evaluation unit (18) is made to compensate the double pulse delays in the evaluation such that the two respective pulses of a double pulse lie over one another in time.

9. A method for distance measurement in accordance with the light transit time process in which a light transmitter (12) transmits individual light pulses and a light receiver (16) receives remitted or reflected individual light pulses as a light reception signal, wherein the light transit time between transmission and reception is determined in an evaluation unit (18) implemented on a programmable component (22), in particular on a field programmable gate array or on a programmable logic device, from a characteristic of the statistical distribution of a plurality of received individual light pulses, and wherein the effective sampling frequency of the programmable component (22) is increased by parallel sampling of a plurality of values of the received light signal in each sampling period preset by the working frequency of the programmable component (22) in that the respective received light signal is supplied to the programmable component (22) on a plurality of parallel delay paths between the light transmitter (12) and the programmable component (22) with mutually different delays,
**characterised in that**
the plurality of individual light pulses are transmitted such that the received light signals are each supplied to the delay paths (36) with a varying time offset; and **in that** averaging takes place over the individual light pulses while compensating the time offset to compensate fluctuations in the delay paths (36).

10. A method in accordance with claim 9,
wherein the time offset is generated by delayed transmission of the individual light pulses by multiples of whole transmission periods and of the sampling by multiples of whole sampling periods, with the transmission frequency being different from the working frequency.

11. A method in accordance with claim 9 or claim 10,
wherein every individual light pulse is transmitted as a double pulse with varying double pulse delay between the two pulses of the double pulses; and wherein the double pulse delays are compensated in the evaluation such that the respective two pulses of a double pulse lie above one another in time.

## Revendications

1. Détecteur optoélectronique (10) destiné à la mesure de distances par un procédé basé sur le temps de parcours de la lumière, qui présente
un émetteur de lumière (12) qui émet des impulsions lumineuses séparées et un récepteur de lumière (16) qui reçoit les impulsions lumineuses séparées, renvoyées ou réfléchies, sous la forme d'un signal de réception de lumière et
une unité d'évaluation (18) réalisée sous la forme d'un module programmable (22), en particulier d'un ensemble de portes programmables sur terrain ou d'un dispositif logique programmable, et configurée pour déterminer le temps de parcours de la lumière entre l'émission et la réception à partir d'une caractéristique de la répartition statistique de plusieurs impulsions lumineuses séparées reçues,
plusieurs parcours parallèles de ralentissement (36) étant prévus entre l'émetteur de lumière (12) et le module programmable (22) et pouvant amener chacun le signal de réception de lumière au module programmable (22) avec des retards différents les uns des autres pour obtenir dans chaque période d'échantillonnage prédéterminée par la fréquence de travail du module programmable (22) et par échantillonnage parallèle plusieurs valeurs du signal de réception de lumière, **caractérisé en ce que**
l'émetteur de lumière (12) est configuré de manière à émettre à un décalage temporel variable des impulsions lumineuses séparées successives et
**en ce que** l'unité d'évaluation (18) est configurée pour calculer la moyenne des impulsions lumineuses séparées en compensant le décalage temporel, pour compenser les variations des parcours de ralentissement (36).

2. Détecteur (10) selon la revendication 1, dans lequel l'émetteur de lumière (12) est configuré pour émettre des impulsions lumineuses séparées successives avec un décalage temporel qui entraîne que les signaux successifs de réception de lumière traversent en particulier plusieurs fois et cycliquement tous les parcours de ralentissement (36).

3. Détecteur (10) selon les revendications 1 ou 2, dans lequel l'émetteur de lumière (12) est configuré pour former le décalage temporel en émettant les impulsions lumineuses séparées avec un retard d'un multiple de périodes entières d'émission, la fréquence d'émission étant différente de la fréquence de travail, l'unité d'évaluation (22) étant configurée pour ralentir l'échantillonnage de multiples de la période d'échantillonnage.

4. Détecteur (10) selon l'une des revendications précédentes, qui présente un dispositif analogique de pré-traitement (28) qui peut amener aux parcours de ralentissement (36) et sous la forme d'un signal bipolaire pré-traité le signal de réception de lumière de chaque impulsion lumineuse séparée reçue.

5. Détecteur (10) selon la revendication 4, dans lequel le dispositif (28) de pré-traitement présente :
- un amplificateur (30), en particulier un amplificateur trans-impédance qui amplifie le signal de réception de lumière et/ou
- un filtre (32), en particulier un filtre passe-bande, qui convertit en un signal bipolaire le signal de réception de lumière initialement unipolaire et/ou
- un amplificateur limite (34) qui amplifie la partie positive ou la partie négative du signal jusqu'à une valeur de saturation.

6. Détecteur (10) selon l'une des revendications précédentes, dans lequel les parcours de ralentissement (36) sont réalisés par des moyens analogiques, sont reliés chacun à une entrée respective du module programmable (22) et présentent des conducteurs de ralentissement ou un filtre passe-tout.

7. Détecteur (10) selon l'une des revendications précédentes, dans lequel la caractéristique est un extremum ou un passage par zéro et en particulier le passage par zéro du signal bipolaire, l'unité d'évaluation (18) étant configurée pour déterminer le passage par zéro à l'aide d'un changement de signe ou d'un ajustement linéaire qui passe par au moins deux points de la répartition.

8. Détecteur (10) selon l'une des revendications précédentes, dans lequel l'émetteur de lumière (12) est configuré pour émettre chaque impulsion lumineuse séparée au moins sous la forme d'une impulsion double à retard variable entre les deux impulsions de l'impulsion double, l'unité d'évaluation (18) étant configurée pour compenser les retards entre les deux impulsions lors de l'évaluation de telle sorte que les deux impulsions d'une impulsion double se superposent dans le temps.

9. Procédé de mesure de distance par un procédé basé sur le temps de parcours de la lumière, dans lequel un émetteur de lumière (12) émet des impulsions lumineuses séparées et un récepteur de lumière (16) reçoit les impulsions lumineuses séparées, renvoyées ou réfléchies, sous la forme d'un signal de réception de lumière,
dans lequel une unité d'évaluation (18) réalisée sur un module programmable (22), en particulier un ensemble de ports programmables sur terrain ou un dispositif logique programmable, détermine le temps de parcours de la lumière entre l'émission et la réception à partir d'une caractéristique de la répartition statistique de plusieurs impulsions lumineuses séparées reçues, la fréquence effective d'échantillonnage du module programmable (22) étant augmentée par échantillonnage parallèle de plusieurs valeurs du signal de réception de lumière dans chaque période d'échantillonnage prédéterminée par la fréquence de travail du module programmable (22) en apportant le signal de réception de lumière au module programmable (22) sur plusieurs parcours parallèles de ralentissement disposés entre l'émetteur de lumière (12) et le module programmable (22) et dont les retards diffèrent les uns des autres,
**caractérisé en ce que**
les différentes impulsions lumineuses séparées sont émises de telle sorte que les signaux de réception de lumière sont apportés aux parcours de ralentissement (36) à un décalage temporel variable et
**en ce que** la moyenne des impulsions lumineuses séparées est déterminée en compensant le décalage temporel pour compenser les variations dans les parcours de ralentissement (36).

10. Procédé selon la revendication 9, dans lequel le décalage temporel est formé en émettant des impulsions lumineuses séparées avec un de multiples de la période complète d'émission et en ralentissant l'échantillonnage de multiples de période complète d'échantillonnage, la fréquence d'émission étant différente de la fréquence de travail.

11. Procédé selon les revendications 9 ou 10, dans lequel chaque impulsion lumineuse séparée est émise comme impulsion double, le retard entre les deux impulsions de l'impulsion double variant, les retards entre les impulsions d'une impulsion double étant compensés lors de l'évaluation de telle sorte que les deux impulsions d'une impulsion double se superposent dans le temps.
